# EUROPEAN PATENT SPECIFICATION

(11) **EP 1 504 861 B1**
(45) Date of publication and mention of the grant of the patent: **14.06.2006**
(21) Application number: 04254492.4
(22) Date of filing: 27.07.2004
(51) Int. Cl.: B26D 7/08, B23D 51/16, B26D 1/06

(54) **Tunable cutting device**
Abstimmbare Schneidvorrichtung
Dispositif de coupe accordable

(30) Priority: 04.08.2003 US 492411 P; 14.04.2004 US 824195
(43) Date of publication of application: 09.02.2005
(73) Proprietor: Ropintassco Holdings, L.P., Duluth, GA 30097 (US)
(72) Inventor: Mitro, Richard John, San Ramon CA 94583 (US); Edwards, Robert Nathan, Freemont CA 94536 (US)
(74) Representative: Cummings, Sean Patrick

(56) References cited:
- DE-A- 19 748 247
- US-A- 4 545 275
- US-A- 5 768 970
- PATENT ABSTRACTS OF JAPAN vol. 1998, no. 11, 30 September 1998 (1998-09-30) & JP 10 175205 A (MURATA MFG CO LTD), 30 June 1998 (1998-06-30)

## Description

### BACKGROUND OF THE INVENTION

The present invention relates to oscillating cutting devices and, more particularly, to operational and design improvements to such devices. Closest prior art is regarded as JP-A-10175205.

### BRIEF SUMMARY OF THE INVENTION

According to the present invention, which is defined in claims 1 and 13, a tunable cutting device is provided. In accordance with one embodiment of the present invention, a tunable cutting device is provided comprising a drive unit configured to oscillate the cutting tool and an oscillation frequency control configured to permit variation of an oscillation frequency of the drive unit as the cutting tool oscillates along the cutting axis.

In accordance with another embodiment of the present invention, a method of operating a tunable cutting device is provided. According to the method oscillation of a drive unit configured to oscillate the cutting tool is initiated, the oscillating cutting tool is engaged with the object to initiate an object cutting operation, and the oscillation frequency of the drive unit is controlled as the cutting tool oscillates along the cutting axis during the object cutting operation.

Accordingly, it is an object of the present invention to provide a tunable cutting device embodying particular operational and design improvements. Other objects of the present invention will be apparent in light of the description of the invention embodied herein.

### BRIEF DESCRIPTION OF THE SEVERAL VIEWS OF THE DRAWINGS

The following detailed description of specific embodiments of the present invention can be best understood when read in conjunction with the following drawings, where like structure is indicated with like reference numerals and in which:
Fig. 1 is an illustration of a tunable cutting device according to one embodiment of the present invention;
Fig. 2 is an illustration of a cutting tool progressing through an object to be cut according to one embodiment of the present invention; and
Fig. 3 is a schematic illustration of a voltage controlled oscillator circuit suitable for use in accordance with the present invention.

### DETAILED DESCRIPTION

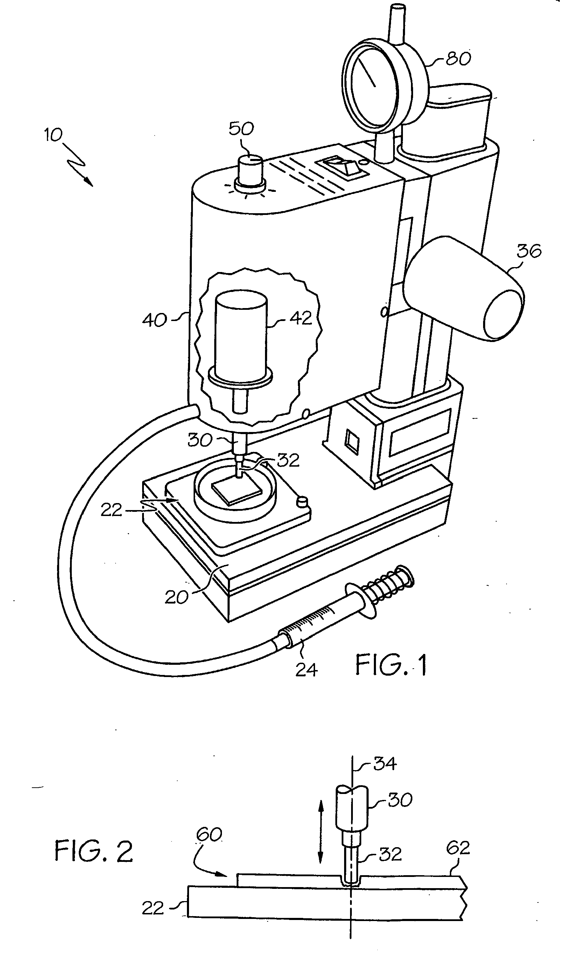

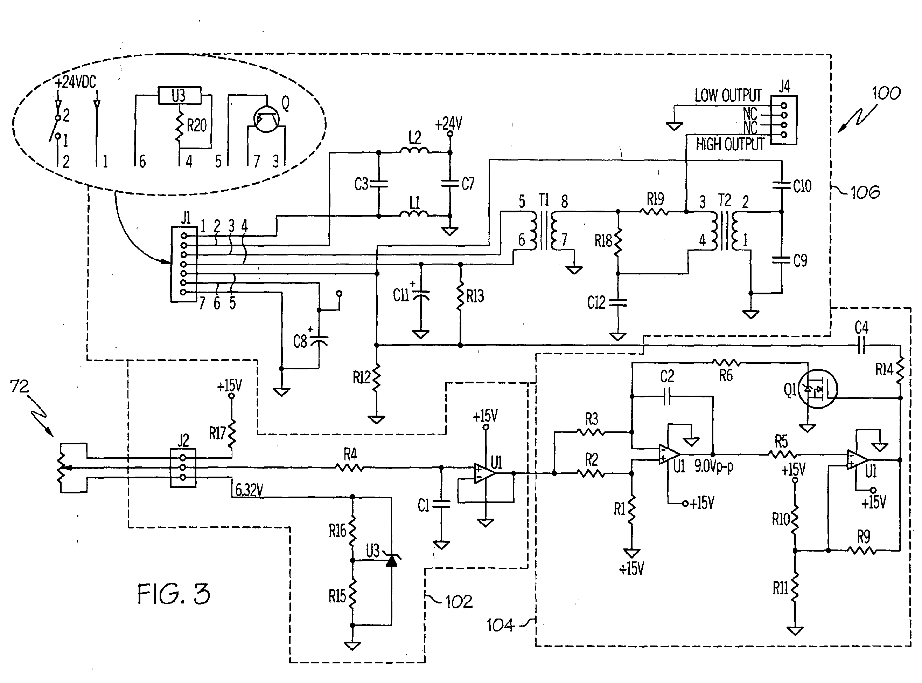

Referring initially to Figs. 1 and 2, a tunable cutting device 10 according to one embodiment of the present invention is illustrated. The cutting device 10 comprises an object support platform 20, a cutting tool mount 30, a cutting tool 32 secured to the cutting tool mount 30, a drive unit 40, and an oscillation frequency control 50.

The object support platform 20 defines an object position 60 and the drive unit 40, which includes a suitable drive element 42, is configured to oscillate the cutting tool 32 along a cutting axis 34 intersecting the object position 60. It is contemplated that the drive unit 40 may comprise a piezoelectric drive element, a magnetostrictive drive element, an electromagnetic drive element, or any other suitable drive element capable of imparting controlled oscillation to the cutting tool. The oscillation frequency control 50 is configured to permit variation of the oscillation frequency of the drive unit 40 as the cutting tool 32 oscillates along the cutting axis 34, as is generally indicated by the directional arrow in Fig. 2.

The tunable cutting device 10 may be configured to indicate the rate at which the cutting tool 32 moves along the cutting axis through a thickness dimension of an object 62 in the object position 60. In this manner, the oscillation frequency control 50 may be configured to permit simultaneous observation of the cutting rate and variation of the oscillation frequency as a function of the cutting rate. In the illustrated embodiment, the oscillation frequency is varied manually by controlling the position of a potentiometer 72 (see Fig. 3) that is accessible via the externally mounted frequency control 50. However, it is contemplated that manual control may be affected by other suitable means. It is also contemplated that control of the oscillation frequency may be automated, particularly where the oscillation frequency is to be controlled as a function of an observed cutting rate.

The cutting rate may be observed visually with the use of, for example, a cutting depth indicator 80 configured to indicate a position of the cutting tool 32 along the cutting axis 34. As will be appreciated by those practicing such an aspect of the present invention, the rate at which the cutting depth varies will be directly proportional to the cutting rate and the oscillation frequency may be controlled to optimize the cutting rate. It is contemplated that any other suitable means of visually observing the cutting rate may be employed without departing from the scope of the present invention.

A cutting rate indication may also be gleaned from an audible observation. For example, according to one aspect of the present invention, the frequency or intensity of the audible signal generated by the contact of the cutting tool 32 with an object 62 in the object position 60 may be taken as an indication of cutting rate. It is further contemplated that an automated process involving a direct or indirect observation of the cutting rate may also be employed according to the present invention. In any case, the oscillation frequency control 50 may be configured to permit variation of the oscillation frequency as a function of the cutting rate.

Although a variety of suitable oscillation frequencies are contemplated according to the present invention, in one embodiment of the method, the oscillation frequency control 50 permits variation of the oscillation frequency from about 18 kHz to about 1000 kHz. More preferably, the oscillation frequency control is configured to permit variation of the oscillation frequency from about 20 kHz to about 41 kHz. In a specific embodiment of the present invention, the piezoelectric drive unit is configured to oscillate the cutting tool 32 along the cutting axis 34 at about 26 kHz. In terms of frequency range, it is contemplated that variation of the oscillation frequency may be permitted over a range of at least about 20 kHz. The precision of the oscillation frequency control 50 will vary according to the needs associated with the particular application of the present invention. For example, in some embodiments of the present invention, the oscillation frequency control is configured to permit variation of the oscillation frequency at increments of less than about 0.2 kHz.

According to one aspect of the present invention, the oscillation frequency control is configured to permit variation of the oscillation frequency across a frequency range including the resonant frequency of the cutting tool 32. In this manner, the effectiveness of the cutting operation may be optimized. By way of illustration and not limitation, it is contemplated that the cutting tool may comprise one of a circular cutting tool, a rectangular cutting tool, a square cutting tool, a triangular cutting tool, and combinations thereof. The cutting tool mount 30 is preferably configured to permit convenient removal and replacement of the cutting tool 32. A cutting height controller 36 may be provided to enable adjustment of the position of the cutting tool along the cutting axis 34. The cutting axis 34 is typically oriented perpendicular to the object support platform 20.

The object support platform 20 and the drive unit 40 may be configured such that the cutting tool 32 and the object 62 are urged towards each other along the cutting tool axis 34 as the cutting tool oscillates. Although there are a variety of suitable ways to accomplish such a relationship, according to one aspect of the present invention, the object support platform 20 comprises a spring loaded, hinged platform forcibly biased in the direction of the cutting tool 32 along the cutting axis 34. To help secure the object 62, the object support platform 20 may comprise a magnetic base. Further, the object table 22 may be configured to contain an abrasive cutting slurry about the object 62. Further to this end, the cutting device 10 may further comprise a cutting slurry supply 24.

Frequency tuning may be accomplished by providing a voltage-controlled oscillator (VCO). The output of the oscillator controls the oscillations of the power stage electronics of the drive unit 40. Fig. 3 is circuit schematic illustrating an example of suitable electronic circuitry of a VCO although a variety of additional circuits will also be suitable for use with the present invention. More specifically, the circuitry 100 includes a control voltage input section 102 for generating the control voltage for the VCO, a voltage controlled oscillator stage 104, and a power driver section 106.

Where an externally accessible potentiometer 72 is incorporated as the control element of the oscillation frequency control 50, the three terminals of the potentiometer are connected to the connector J2 of the control voltage input section 102. The resistors R15, R16, R17 and the diode U3 determine the voltage range of the potentiometer. This voltage appears at the output of the operational amplifier U1. By way of illustration and not limitation, the components in the control voltage input section 102 may be identified as follows: R4, 1kΩ; R15, 1.74kΩ; R16, 2.67kΩ; R17, 215Ω; and C1, 0.1µF.

In the voltage controlled oscillator stage 104, the control voltage is applied to the resistors R2, R3. The two operational amplifiers U1 and associated components form a feedback oscillator system that generates a square wave of constant duty-cycle. The frequency of the square wave is proportional to the control voltage. The square wave goes to the power driver section of the circuitry through the resistor R14 and the capacitor C4. By way of illustration and not limitation, the components in the voltage controlled oscillator stage 104 may be identified as follows: R1, R2, R3, 4.02kΩ; R5, R6, 2.0kΩ; R9, R14, 3.32skΩ; R10, R11, 10kΩ; C2, 0.0022µF; C4, 0.1 µF; and Q 1, n-channel enhancement mode field effect transistor.

In the power driver section 106, the drive element 42 of the drive unit 40 is connected to connector J4. The main drive transistor Q, current limiter U3, and +24V power supply are external components that connect to J1. The drive transistor connects to J1 pins 3, 5, 7. The base drive comes into J1 at pin 5 from the voltage controlled oscillator stage 104. The collector output connects to the first stage of the transformer T 1 at pins 5, 6. The first stage of the transformer T1 (pins 5, 6, 7, 8) steps-up the voltage to the piezo drive element 42 of the drive unit 40. The second stage (pins 1, 2, 3, 4) forms an L-C resonance with the capacitance of the piezo element. By way of illustration and not limitation, the components in the power driver section 106 may be identified as follows: R12, 10kΩ; R13 15kΩ; R18, 150Ω, 5W; R19, 100Ω, 5W; R20, 2Ω, 3W; C3, C7, 0.1µF; C8, 100µF, 63V; C9,0.015µF, 50V; C10, 0.02µF, 100V; C11, 1000µF, 35V; C12, 0.001µF, 400V; L1, L2, 10MHz, 2.5T; T1, 6mH/13mH; T2, 1.6mH/10mH; and U3, voltage regulator.

It is noted that terms like "preferably," "commonly," and "typically" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention, which is only limited by the claims.

For the purposes of describing and defining the present invention it is noted that the term "substantially" is utilized herein to represent the inherent degree of uncertainty that may be attributed to any quantitative comparison, value, measurement, or other representation.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

## Claims

1. A method of operating a tunable cutting device (10), said method comprising:
positioning an object on an object support platform (20) of said tunable cutting device so as to define an object position (60);
securing a cutting tool (32) to a cutting tool mount (30) of said device;
initiating oscillation of a drive unit (40) configured to oscillate said cutting tool along a cutting axis (34) intersecting said object position;
engaging said oscillating cutting tool and said object so as to initiate an object cutting operation; **characterized by**
controlling an oscillation frequency of said drive unit as said cutting tool oscillates along said cutting axis by observing a cutting rate at which said cutting tool moves along said cutting axis, wherein said observation of said cutting rate comprises a visual observation of a cutting rate indicator, an audible observation of a cutting operation, an automated observation of said cutting rate, or combinations thereof.

2. A method of operating a tunable cutting device as claimed in claim 1 wherein said oscillation frequency of said drive unit is controlled with an oscillation frequency control, said cutting tool defines a resonant frequency, and said oscillation frequency control is configured to permit variation of said oscillation frequency across a frequency range including said resonant frequency of said cutting tool.

3. A method of operating a tunable cutting device as claimed in claim 2 wherein said oscillation frequency control is configured to permit variation of said oscillation frequency from about 18 kHz to about 1000 kHz.

4. A method of operating a tunable cutting device as claimed in claim 2 wherein said oscillation frequency control is configured to permit variation of said oscillation frequency from about 20 kHz to about 41 kHz.

5. A method of operating a tunable cutting device as claimed in claim 2 wherein said oscillation frequency control is configured to permit variation of said oscillation frequency over a range of at least about 20 kHz.

6. A method of operating a tunable cutting device as claimed in claim 2 wherein said oscillation frequency control is configured to permit variation of said oscillation frequency at increments of less than about 0.2 kHz.

7. A method of operating a tunable cutting device as claimed in claim 1 wherein said variation of said oscillation frequency is affected through manual control of said oscillation frequency.

8. A method of operating a tunable cutting device as claimed in claim 1 wherein said variation of said oscillation frequency is affected through manual control of a potentiometer.

9. A method of operating a tunable cutting device as claimed in claim 1 wherein said variation of said oscillation frequency is affected through automatic control of said oscillation frequency.

10. A method of operating a tunable cutting device as claimed in claim 1 wherein said oscillation frequency of said drive unit is controlled with an oscillation frequency control comprising a voltage controlled oscillator.

11. A method of operating a tunable cutting device as claimed in claim 10 wherein said voltage controlled oscillator comprises a control voltage input section, a voltage controlled oscillator stage, and a power driver section.

12. A method of operating a tunable cutting device as claimed in claim 1 wherein said observation of said cutting rate is provided by a cutting depth indicator configured to indicate a position of said cutting tool along said cutting axis.

13. A tunable cutting device comprising:
an object support platform (20) defining an object position (60);
a cutting tool mount (30);
a cutting tool (32) secured to said cutting tool mount and defining a resonant frequency;
a drive unit (40) configured to oscillate said cutting tool along a cutting axis (34) intersecting said object position at a frequency of between about 20 kHz and about 41 kHz; **characterized by** further comprising
an oscillation frequency control configured to permit variation of an oscillation frequency of said drive unit as said cutting tool oscillates along said cutting axis, wherein
said oscillation frequency control comprises a voltage controlled oscillator coupled to said drive unit,
said oscillation frequency control is configured to permit variation of said oscillation frequency across a frequency range including said resonant frequency of said cutting tool,
said variation of said oscillation frequency is permitted over a range of at least about 20 kHz at increments of less than about 0.2 kHz, and
said variation of said oscillation frequency is affected through manual control of an externally accessible potentiometer; and
a cutting depth indicator configured to indicate a position of said cutting tool along said cutting axis, wherein
said cutting depth indicator is further configured to indicate a cutting rate at which said cutting tool moves along said cutting axis,
said oscillation frequency control is configured to permit variation of said oscillation frequency as a function of said cutting rate indicated by said cutting depth indicator,
said oscillation frequency control is configured to permit simultaneous observation of said cutting rate and variation of said oscillation frequency.

## Patentansprüche

1. , Verfahren zum Betreiben einer abstimmbaren Schneidvorrichtung (10), welches folgende Schritte umfasst:
- Positionieren eines Gegenstandes auf einer Objektträger-Plattform (20) der abstimmbaren Schneidvorrichtung in der Weise, dass eine Gegenstandsposition (60) definiert wird;
- Befestigen eines Schneidwerkzeugs (32) an einer Schneidwerkzeughalterung (30) der Vorrichtung;
- Einleiten einer Oszillation einer Antriebseinheit (40), welche so ausgelegt ist, dass sie das Schneidwerkzeug entlang einer Schneidachse (34), welche sich mit der Gegenstandsposition schneidet, oszillieren lässt;
- In Eingriff Bringen des oszillierenden Schneidwerkzeugs und des Schneidobjektes, um so einen Schneidvorgang des Gegenstandes einzuleiten;
**gekennzeichnet durch**
Steuern bzw. Regeln einer Oszillationsfrequenz der Antriebseinheit, während das Schneidwerkzeug entlang der Schneidachse oszilliert, indem eine Schneidgeschwindigkeit überwacht wird, mit welcher sich das Schneidwerkzeug entlang der Schneidachse bewegt, wobei die Überwachung der Schneidgeschwindigkeit eine visuelle Überwachung eines Schneidgeschwindigkeitsanzeigers, eine akustische Überwachung eines Schneidvorgangs, eine automatisierte Überwachung der Schneidgeschwindigkeit oder Kombinationen davon umfasst.

2. Verfahren zum Betreiben einer abstimmbaren Schneidvorrichtung nach Anspruch 1, bei welchem die Oszillationsfrequenz der Antriebseinheit mit einer Oszillationsfrequenzsteuerung bzw. -regelung gesteuert bzw. geregelt wird, wobei das Schneidwerkzeug eine Resonanzfrequenz definiert, und bei welchem die Oszillationsfrequenzsteuerung bzw. -regelung so ausgelegt ist, dass sie eine Veränderung der Oszillationsfrequenz über einen Frequenzbereich ermöglicht, welcher die Resonanzfrequenz des Schneidwerkzeugs umfasst.

3. Verfahren zum Betreiben einer abstimmbaren Schneidvorrichtung nach Anspruch 2, bei welchem die Oszillationsfrequenzsteuerung bzw. -regelung so ausgelegt ist, dass sie eine Veränderung der Oszillationsfrequenz von etwa 18 kHz bis etwa 1.000 kHz ermöglicht.

4. Verfahren zum Betreiben einer abstimmbaren Schneidvorrichtung nach Anspruch 2, bei welchem die Oszillationsfrequenzsteuerung bzw. -regelung so ausgelegt ist, dass sie eine Veränderung der Oszillationsfrequenz von etwa 20 kHz bis etwa 41 kHz ermöglicht.

5. Verfahren zum Betreiben einer abstimmbaren Schneidvorrichtung nach Anspruch 2, bei welchem die Oszillationsfrequenzsteuerung bzw. -regelung so ausgelegt ist, dass sie eine Veränderung der Oszillationsfrequenz über einen Bereich von mindestens etwa 20 kHz ermöglicht.

6. Verfahren zum Betreiben einer abstimmbaren Schneidvorrichtung nach Anspruch 2, bei welchem die Oszillationsfrequenzsteuerung bzw. -regelung so ausgelegt ist, dass sie eine Veränderung der Oszillationsfrequenz in Schrittweiten von weniger als etwa 0,2 kHz ermöglicht.

7. Verfahren zum Betreiben einer abstimmbaren Schneidvorrichtung nach Anspruch 1, bei welchem die Veränderung der Oszillationsfrequenz durch manuelle Steuerung der Oszillationsfrequenz beeinflusst wird.

8. Verfahren zum Betreiben einer abstimmbaren Schneidvorrichtung nach Anspruch 1, bei welchem die Veränderung der Oszillationsfrequenz durch manuelle Steuerung eines Potentiometers beeinflusst wird.

9. Verfahren zum Betreiben einer abstimmbaren Schneidvorrichtung nach Anspruch 1, bei welchem die Veränderung der Oszillationsfrequenz durch automatische Steuerung der Oszillationsfrequenz beeinflusst wird.

10. Verfahren zum Betreiben einer abstimmbaren Schneidvorrichtung nach Anspruch 1, bei welchem die Oszillationsfrequenz der Antriebseinheit mit einer Oszillationsfrequenzsteuerung bzw. -regelung gesteuert bzw. geregelt wird, welche einen spannungsgesteuerten Oszillator umfasst.

11. Verfahren zum Betreiben einer abstimmbaren Schneidvorrichtung nach Anspruch 10, bei welchem der spannungsgesteuerte Oszillator einen Steuerspannungs-Eingangsabschnitt, eine spannungsgesteuerte Oszillatorstufe und einen Leistungsantriebsabschnitt aufweist.

12. Verfahren zum Betreiben einer abstimmbaren Schneidvorrichtung nach Anspruch 1, bei welchem die Beobachtung der Schneidgeschwindigkeit über einen Schnitttiefenanzeiger erfolgt, der so ausgelegt ist, dass er eine Position des Schneidwerkzeugs entlang der Schneidachse anzeigt.

13. Abstimmbare Schneidvorrichtung, welche Folgendes aufweist:
- eine Objektträger-Plattform (20), welche eine Gegenstandsposition (60) definiert;
- eine Schneidwerkzeughalterung (30);
- ein Schneidwerkzeug (32), welches an der Schneidwerkzeughalterung befestigt ist und eine Resonanzfrequenz definiert;
- eine Antriebseinheit (40), welche so ausgelegt ist, dass sie das Schneidwerkzeug entlang einer sich mit der Gegenstandsposition schneidenden Schneidachse (34) mit einer Frequenz in Oszillation versetzt, welche zwischen etwa 20 kHz und etwa 41 kHz liegt,
**dadurch gekennzeichnet, dass** sie des Weiteren Folgendes aufweist:
- eine Oszillationsfrequenzsteuerung bzw. -regelung, die so ausgelegt ist, dass sie eine Veränderung einer Oszillationsfrequenz der Antriebseinheit zulässt, während das Schneidwerkzeug entlang der Schneidachse oszilliert, wobei
die Oszillationsfrequenzsteuerung bzw. -regelung einen an die Antriebseinheit gekoppelten spannungsgesteuerten Oszillator aufweist,
die Oszillationsfrequenzsteuerung bzw. -regelung so ausgelegt ist, dass sie eine Veränderung der Oszillationsfrequenz über einen Frequenzbereich hinweg ermöglicht, welcher die Resonanzfrequenz des Schneidwerkzeugs umfasst,
die Veränderung der Oszillationsfrequenz über einen Bereich von mindestens 20 kHz in Schrittweiten von weniger als etwa 0,2 kHz möglich ist und
die Veränderung der Oszillationsfrequenz durch manuelle Steuerung eines von außen zugänglichen Potentiometers beeinflussbar ist, sowie
- einen Schnitttiefenanzeiger, der so ausgelegt ist, dass er eine Position des Schneidwerkzeugs entlang der Schneidachse anzeigt, wobei
der Schnitttiefenanzeiger des Weiteren so ausgelegt ist, dass er eine Schneidgeschwindigkeit anzeigt, mit welcher sich das Schneidwerkzeug entlang der Schneidachse bewegt,
die Oszillationsfrequenzsteuerung bzw. -regelung so ausgelegt ist, dass sie eine Veränderung der Oszillationsfrequenz als eine Funktion der Schneidgeschwindigkeit ermöglicht, welche vom Schnitttiefenanzeiger angezeigt wird, und
die Oszillationsfrequenzsteuerung bzw. -regelung so ausgelegt ist, dass sie eine gleichzeitige Überwachung der Schneidgeschwindigkeit und der Veränderung der Oszillationsfrequenz zulässt.

## Revendications

1. Procédé de mise en oeuvre d'un dispositif de découpe réglable (10), ledit procédé comprenant les étapes consistant à :
positionner un objet sur une plate-forme de support d'objet (20) dudit dispositif de découpe réglable de façon à définir une position d'objet (60) ;
fixer un outil de découpe (32) sur un montant d'outil de découpe (30) dudit dispositif ;
initier une oscillation d'une unité d'entraînement (40) configurée pour osciller ledit outil de découpe le long d'un axe de découpe (34) coupant ladite position d'objet ;
engager ledit outil de découpe oscillant et ledit objet de façon à initier une opération de découpe d'objet ; **caractérisée par** l'étape consistant à
commander une fréquence d'oscillation de ladite unité d'entraînement à mesure que ledit outil de découpe oscille le long dudit axe de découpe en observant une vitesse de découpe à laquelle ledit outil de découpe se déplace le long dudit axe de découpe, où ladite observation de ladite vitesse de découpe comprend une observation visuelle d'un indicateur de vitesse de découpe, une observation audible d'une opération de découpe, une observation automatisée de ladite vitesse de découpe, ou les combinaisons de celles-ci.

2. Procédé de mise en oeuvre d'un dispositif de découpe réglable selon la revendication 1, dans lequel ladite fréquence d'oscillation de ladite unité d'entraînement est commandée par une commande de fréquence d'oscillation, ledit outil de découpe définit une fréquence de résonance, et ladite commande de fréquence d'oscillation est configurée pour permettre une variation de ladite fréquence d'oscillation à travers une plage de fréquence comprenant ladite fréquence de résonance dudit outil de découpe.

3. Procédé de mise en oeuvre d'un dispositif de découpe réglable selon la revendication 2, dans lequel ladite commande de fréquence d'oscillation est configurée pour permettre une variation de ladite fréquence d'oscillation d'environ 18 kHz à environ 1 000 kHz.

4. Procédé de mise en oeuvre d'un dispositif de découpe réglable selon la revendication 2, dans lequel ladite commande de fréquence d'oscillation est configurée pour permettre une variation de ladite fréquence d'oscillation d'environ 20 kHz à environ 41 kHz.

5. Procédé de mise en oeuvre d'un dispositif de découpe réglable selon la revendication 2, dans lequel ladite commande de fréquence d'oscillation est configurée pour permettre une variation de ladite fréquence d'oscillation sur une plage d'au moins environ 20 kHz.

6. Procédé de mise en oeuvre d'un dispositif de découpe réglable selon la revendication 2, dans lequel ladite commande de fréquence d'oscillation est configurée pour permettre une variation de ladite fréquence d'oscillation à des incréments inférieurs à environ 0,2 kHz.

7. Procédé de mise en oeuvre d' un dispositif de découpe réglable selon la revendication 1, dans lequel ladite variation de ladite fréquence d'oscillation est effectuée par commande manuelle de ladite fréquence d'oscillation.

8. Procédé de mise en oeuvre d'un dispositif de découpe réglable selon la revendication 1, dans lequel ladite variation de ladite fréquence d'oscillation est effectuée par commande manuelle d'un potentiomètre.

9. Procédé de mise en oeuvre d'un dispositif de découpe réglable selon la revendication 1, dans lequel ladite variation de ladite fréquence d'oscillation est effectuée par commande automatique de ladite fréquence d'oscillation.

10. Procédé de mise en oeuvre d'un dispositif de découpe réglable selon la revendication 1, dans lequel ladite fréquence d'oscillation de ladite unité d'entraînement est commandée par une commande de fréquence d'oscillation comprenant un oscillateur commandé en tension.

11. Procédé de mise en oeuvre d'un dispositif de découpe réglable selon la revendication 10, dans lequel ledit oscillateur commandé en tension comprend une section d'entrée de tension de commande, un étage d'oscillateur commandé en tension et une section à commande mécanique.

12. Procédé de mise en oeuvre d'un dispositif de découpe réglable selon la revendication 1, dans lequel ladite observation de ladite vitesse de découpe est fournie par un indicateur de profondeur de découpe configuré pour indiquer une position dudit outil de découpe le long dudit axe de découpe.

13. Dispositif de découpe réglable comprenant:
une plate-forme de support d'objet (20) définissant une position d'objet (60) ;
un montant d'outil de découpe (30);
un outil de découpe (32) fixé audit montant d'outil de découpe et définissant une fréquence de résonance ;
une unité d'entraînement (40) configurée pour osciller ledit outil de découpe le long d'un axe de découpe (34) coupant ladite position d'objet à une fréquence entre environ 20 kHz et environ 41 kHz ; **caractérisé en ce qu'**il comprend en outre
une commande de fréquence d'oscillation configurée pour permettre une variation d'une fréquence d'oscillation de ladite unité d'entrainement à mesure que ledit outil découpe oscille le long dudit axe de découpe, dans lequel ladite commande de fréquence d'oscillation comprend un oscillateur commandé en tension couplé à ladite unité d'entraînement,
ladite commande de fréquence d'oscillation est configurée pour permettre une variation de ladite fréquence d'oscillation à travers une plage de fréquence comprenant ladite fréquence de résonance dudit outil de découpe,
ladite variation de ladite fréquence d'oscillation est permise sur une plage d'au moins environ 20 kHz à des incréments inférieurs à environ 0,2 kHz, et
ladite variation de ladite fréquence d'oscillation est effectuée par commande manuelle d'un potentiomètre accessible de manière externe ; et
un indicateur de profondeur de découpe configuré pour indiquer une position dudit outil de découpe le long dudit axe de découpe, où
ledit indicateur de profondeur de découpe est en outre configuré pour indiquer une vitesse de découpe à laquelle ledit outil de découpe se déplace le long dudit axe de découpe,
ladite commande de fréquence d'oscillation est configurée pour permettre une variation de ladite fréquence d'oscillation en fonction de ladite vitesse de découpe indiquée par ledit indicateur de profondeur de découpe,
ladite commande de fréquence d'oscillation est configurée pour permettre une observation simultanée de ladite vitesse de découpe et une variation de ladite fréquence d'oscillation.
